# EUROPÄISCHE PATENTANMELDUNG

(11) **EP 0 940 332 A2**
(43) Veröffentlichungstag der Anmeldung: **08.09.1999**
(21) Anmeldenummer: 99103824.1
(22) Anmeldetag: 27.02.1999
(51) Int. Cl.: B62K 25/06

(54) **Zweirädriges Fahrzeug, insbesondere Fahrrad**

(30) Priorität: 04.03.1998 DE 29803744 U
(71) Anmelder: Kramer-Massow, Klaus, 79104 Freiburg (DE)
(72) Erfinder: Kramer-Massow, Klaus, 79104 Freiburg (DE)
(74) Vertreter: Goy, Wolfgang, Dipl.-Phys.

(57) **Zusammenfassung**

Ein zweirädriges Fahrzeug, insbesondere Fahrrad, weist als Federung 5 für das Vorderrad 3 und/oder für das Hinterrad 4 ein Rohr 6 auf, welches fest an der Lenkgabel 2 bzw. dem Rahmen 1 angeordnet ist. Durch das Rohr 6 ist eine Stange 7 hindurchgeführt, wobei das untere offene Ende der Stange 7 aus dem Rohr 6 herausragt. Am unteren Ende der Stange 7 ist die Achse A des Rades 3, 4 angeordnet.

## Beschreibung

Die Erfindung betrifft ein zweirädriges Fahrzeug, insbesondere Fahrrad, nach dem Oberbegriff des Anspruchs 1.

Bei herkömmlichen Zweirädern werden zur Hinterradfederung meistens ein- bis viergelenkige Verbindungen verwendet. Der Nachteil dieser Gelenksysteme besteht darin, daß sie je nach Ausführung aufwendig und verschleißanfällig sind. Für die Vorderradfederung sind Teleskopfedergabeln mit ineinander gleitenden Rohren bekannt. Diese Teleskopfedergabeln benötigen nachteiligerweise je nach Ausführung große Radachsen und Rohrdurchmesser sowie zusätzliche Querverbindungen (sogenannte Booster) zur Kompensation von Torsionskräften. Außerdem kann der Gepäckträger nur schlecht angeordnet werden.

Davon ausgehend liegt der Erfindung die **Aufgabe** zugrunde, eine verbesserte Radaufhängung zur federnden Lagerung eines Laufrades eines zweirädrigen Fahrzeugs, insbesondere eines Fahrrads zu schaffen.

Die technische **Lösung** ist gekennzeichnet durch die Merkmale im Kennzeichen des Anspruchs 1.

Die Grundidee der erfindungsgemäßen Radaufhängung zur federnden Lagerung eines Laufrades besteht darin, daß nicht wie bei den gängigen Teleskopfedergabeln das Rohr unten geschlossen ist (so daß zwischen dem Rohrboden und der Kolbenstange eine Feder abgeschützt ist), sondern daß erfindungsgemäß das Rohr unten offen ist, so daß die Stange als durchgehendes Rohr herausragen kann. Dadurch ist eine robuste sowie im Rahmen bzw. der Lenkgabel integrierte Zweiradfederung geschaffen, welche keine Wälz- oder Kugellager benötigt und welche variabel mit verschiedenen Feder- und/oder Dämpfungssystemen ausgerüstet werden kann. Das Federsystem ist äußerst verschleißarm sowie stabil und als City- oder Touren- bzw. Alltagsfahrrad besonders geeignet. Das Rohr der Federung kann dabei einen Teil des Rahmens bzw. der Lenkgabel bilden oder aber auch am eigentlichen Rahmen bzw. an der eigentlichen Lenkgabel angeordnet sein.

In der Regel ist gemäß Anspruch 2 das Rohr fest an der Lenkgabel bzw. am Rahmen angeordnet. Es ist aber auch eine federnde Verbindung des Rohres am Rahmen denkbar. Eine derartige geringfügig elastische Befestigung des Rohres der Hinterradfederung vermindert die Beschädigungsgefahr der ineinander gleitenden Elemente (Rohr, Stange) bei starken Stößen.

Eine konstruktive Realisierung schlägt Anspruch 3 vor. Das Grundprinzip besteht darin, in dem Doppelrohrsystem bestehend aus dem äußeren Rohr und dem inneren Stangenrohr das Federelement anzuordnen. Dadurch ergibt sich eine sehr kompakte und platzsparende Bauweise. Außerdem liegt das Federelement geschützt im Innern des Rohres und ist darüber hinaus nicht sichtbar, so daß daraus ein positiver optischer Gesamteindruck resultiert. Bei dem Federelement kann es sich um eine Wendelfeder handeln, welche zwischen einem Boden des Stangenrohres und dem äußeren Rohr abgestützt ist. Statt des Bodens kann auch eine in dem Stangenrohr sich befindende Aufhängeeinrichtung für das Federelement verwendet werden. Als oberer Abstützpunkt für das Federelement kann ein Rahmenteil oder insbesondere auch der Gepäckträger dienen. Auch sind selbstverständlich andere Federelemente statt der vorerwähnten Wendelfeder denkbar.

Eine Weiterbildung hiervon schlagen die Merkmale des Anspruchs 4 vor. Die Grundidee dieser Weiterbildung besteht darin, daß das Federelement mitsamt seiner Abstützung vollständig im Stangenrohr angeordnet ist. Die im Innern des äußeren Rohres sich befindende Aufhängeeinrichtung dient als Gegenlager für das Federelement. Bei der Aufhängeeinrichtung kann es sich beispielsweise um einen Quersteg handeln, welcher sich längs des Innendurchmessers des äußeren Rohres erstreckt. Damit das Stangenrohr diese Aufhängeeinrichtung passieren kann, weist es einen in Verschieberichtung verlaufenden Schlitz auf. Der Schlitz hat mindestens die Länge des maximalen Federweges.

Die Weiterbildung gemäß Anspruch 5 betrifft eine alternative konstruktive Realisierung für die Anordnung des Federelements. Die Grundidee hier liegt darin, das Federelement im Außenbereich anzuordnen. Beispielsweise kann als Federelement eine Zylinder/Kolben-Einheit eingesetzt werden. Diese läßt sich groß dimensionieren und erstreckt sich in der Regel parallel zu dem Rohr der Federung. Die Zylinder/Kolben-Einheit kann dabei zwischen dem Rohr selbst oder aber zwischen dem Rahmen (einschließlich eines Gepäckträgers) und der Stange abgestützt sein. Dies gilt gleichermaßen auch für die Vorderradfederung, bei der die Zylinder/Kolben-Einheit entweder direkt am Rohr angreift oder an einem Element der Lenkgabel. Statt der Zylinder/Kolben-Einheit kann auch eine Wendelfeder oder ein Gummi- oder Elastomerpuffer vorgesehen sein, welcher die Stange konzentrisch umgibt.

Die Weiterbildung des Anspruchs 6 schlägt - wie zuvor bereits angedeutet - die verschiedenen Varianten in der Ausbildung des Federelements vor. Diese Alternativen können auch miteinander kombiniert werden.

Der Vorteil der Weiterbildung des Anspruchs 7 besteht darin, daß die Radachsenaufnahme im Innern der Stange befestigt ist, d.h. am unteren Ende der inneren Stange, welche insbesondere als Stangenrohr ausgebildet ist, ist die Aufnahme in die Stange eingefügt. Dadurch befindet sich die Radachse knapp unterhalb des unteren Endes der inneren Stange. Damit kann insgesamt der Federweg besser ausgenutzt werden, da er knapp bis über die Radachse geht. Vorteilhafterweise reicht die Radachsenaufnahme bis knapp über den Unterrand des äußeren Rohres. Dadurch kann die innere Stange verstärkt werden.

Eine bevorzugte Weiterbildung der erfindungsgemäßen Federung schlägt Anspruch 8 vor. Bei dem Führungsteil in der Antriebskette kann es sich um einen Punkt oberhalb des Tretlagers beispielsweise zwischen dem kleinsten und dem größten Kettenblatt handeln. Weiterhin denkbar wäre ein Umlenkzahnritzel oder Umlenkröhrchen, über welches das obere, kraftübertragende Trum der Kette oder des Zahnriemens läuft. Schließlich kann das Führungsteil durch ein Zusatzgetriebe definiert werden, wobei hier die Antriebskraft vom Tretlager über dieses Zusatzgetriebe auf die Hinterradachse übertragen wird. Dadurch, daß der Abstand zwischen dem Führungsteil bzw. einem dem Führungsteil naheliegenden Punkt und der Radachse für den ausgefederten sowie den maximal eingefederten Zustand im wesentlichen gleich ist, wird insgesamt ein Pedalrückschlag vermieden.

Eine Weiterbildung hiervon schlagen die Merkmale des Anspruchs 9 vor. Durch die Verwendung eines Umlenkröllchens oder Zusatzgetriebes kann für das Außenrohr der Hinterradaufhängung ein flacherer Neigungswinkel gewählt werden, wodurch das Ansprechverhalten der Federung verbessert wird. Somit ist das Federungssystem auch für Sportfahrräder verwendbar, da es wegen seiner grundsätzlichen Konstruktionsmerkmale leicht, gleichzeitig stabil und verwindungssteif ist.

Die Weiterbildung gemäß Anspruch 10 hat den Vorteil, daß die Federung mit den beiden beweglichen Stangen eine große innere Stabilität aufweist, da die Federbereiche links und rechts miteinander verbunden sind. Zur Schaffung der Brücke zwischen den beiden Stangen treten diese aus ihren äußeren Rohren oben heraus. Alternativ können die Außenrohre in ihrer Längserstreckung eine Schlitzung aufweisen, durch welche die Verbindungsbrücke an den inneren Stangen angreifen.

Die Weiterbildung gemäß Anspruch 11 hat den Vorteil, daß die Radfederung bei Bedarf ausgeschaltet werden kann, so daß dann das Fahrrad ohne Federung ist.

Weiterhin wird gemäß Anspruch 12 noch vorgeschlagen, daß der Federung ein Dämpfungselement zugeordnet ist. Bei dem Dämpfungselement wird die Federwirkung vergleichmäßigt.

Schließlich hat die Weiterbildung gemäß Anspruch 13 den Vorteil, daß der Gepäckträger stabil gehalten ist.

Ausführungsbeispiele einer erfindungsgemäßen Federung bei einem Fahrrad werden nachfolgend anhand der Zeichnungen beschrieben. In diesen zeigt:
- Fig. 1: eine perspektivische Ansicht eines Fahrrads;
- Fig. 2: eine Seitenansicht des Fahrrads in Fig. 1;
- Fig. 3: eine Weiterentwicklung des Fahrrads in Fig. 2 mit einer Arretiereinrichtung für die Federung;
- Fig. 4: das Funktionsprinzip einer weiteren Ausführungsform einer Hinterradfederung;
- Fig. 5: eine weitere Ausführungsform eines Fahrrads mit einem Umlenkzahnrad für die Antriebskette;
- Fig. 6: eine weitere Ausführungsform eines Fahrrads mit einem Zusatzgetriebe;
- Fig. 7 a und b: eine weitere Ausführungsform einer Federung mit einem Gummipuffer;
- Fig. 8: eine weitere Ausführungsform einer Federung mit ganz oder teilweise im Stangenrohr liegender Federung, welche sich am Gepäckträger abstützt;
- Fig. 9 a und b: ein geschnittener Detailausschnitt einer Federung mit einer innenliegenden Wendelfeder;
- Fig. 10: ein geschnittener Detailausschnitt durch das untere Ende des inneren Stangenrohres mit eingesetzter Aufnahme für die Radachse.

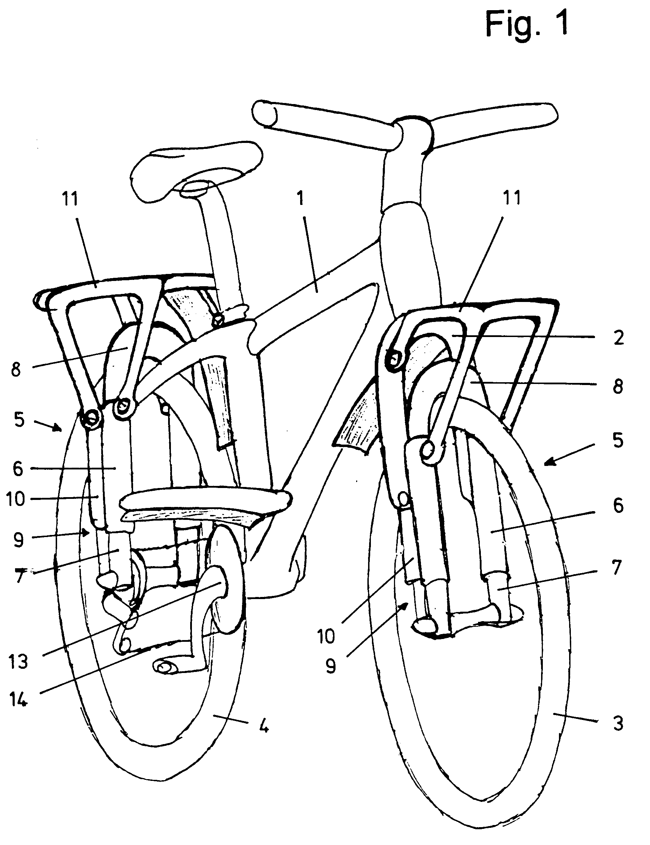

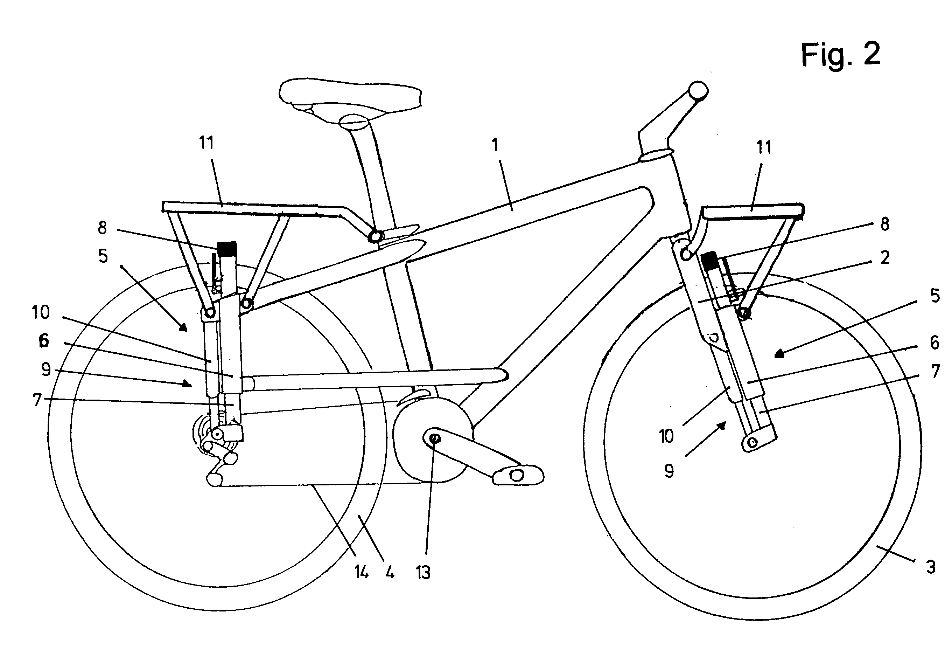

Das Fahrrad der Fig. 1 und 2 weist einen Rahmen 1 mit einer vorderen Lenkgabel 2 auf. Sowohl das Vorderrad 3 als auch das Hinterrad 4 besitzt eine Federung 5, welche in dem Ausführungsbeispiel der Fig. 1 und 2 vom Prinzip her identisch ausgebildet sind.

Die Federung 5 des Hinterrades 4 weist ein in etwa vertikales Rohr 6 auf, weiches einen Teil des Rahmens 1 bildet. Innerhalb des Rohres 6 befindet sich längsverschiebbar eine Stange 7. Da auf beiden Seiten des Hinterrades 4 jeweils eine Federung 5 vorgesehen ist und daher auch zwei Rohre 6 und zwei Stangen 7 vorgesehen sind, sind diese beiden Stangen 7 zwischen ihren oberen, aus den Rohren 6 herausragenden Enden miteinander durch eine Brücke 8 starr miteinander verbunden. Die beiden Stangen 7 und die Brücke 8 bilden somit zusammen ein umgekehrtes "U".

Zwischen dem Rohr 6 und dem unteren Ende der Stange 7 ist als Federelement 9 eine Zylinder/Kolben-Einheit 10 angeordnet. Außerdem befindet sich am unteren Ende der Stange 7 die Achse A des Hinterrades 4.

Schließlich ist noch zwischen dem Rahmen 1 und dem Rohr 6 ein Gepäckträger 11 angeordnet.

Die Federung des Vorderrades 3 ist entsprechend ausgebildet. An der Lenkgabel 2 befinden sich beidseitig jeweils ein Rohr 6, in dem die beiden Stangen 7 geführt sind. Auch hier sind die beiden Stangen 7 durch eine Brücke 8 miteinander verbunden. Als Federelement 9 dient auch hier eine Zylinder/Kolben-Einheit 10.

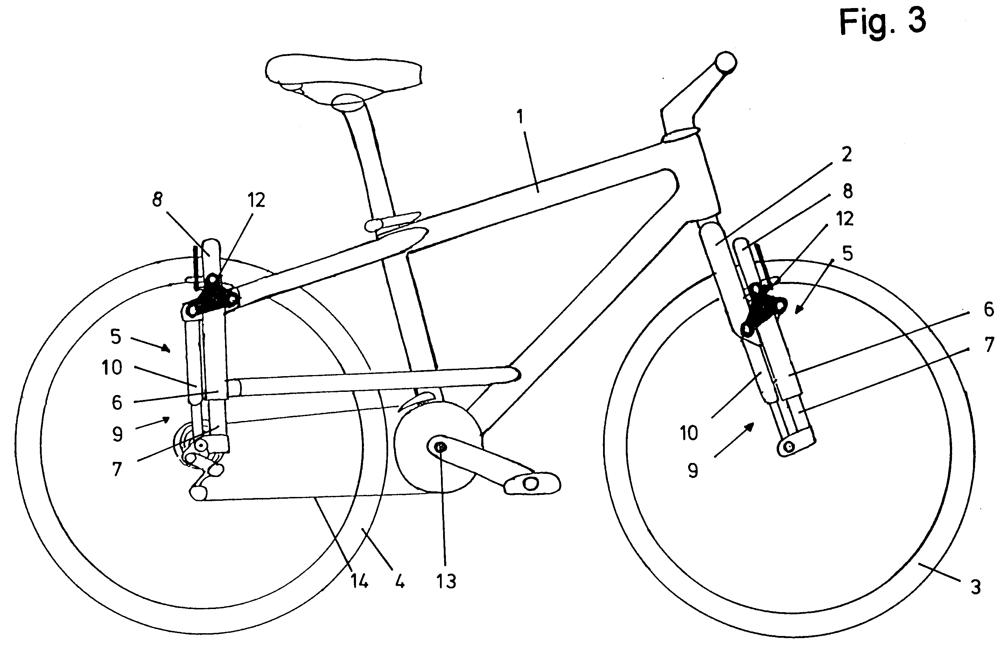

Die Ausführungsform der Fig. 3 unterscheidet sich von der Ausführungsform der Fig. 1 und 2 dadurch, daß zusätzlich noch eine Arretiereinrichtung 12 vorgesehen ist, welche die Stange 7 bezüglich des Rohres 6 und somit die Federung blockiert. Diese Arretiereinrichtung 12 ist in Fig. 3 schematisch angedeutet.

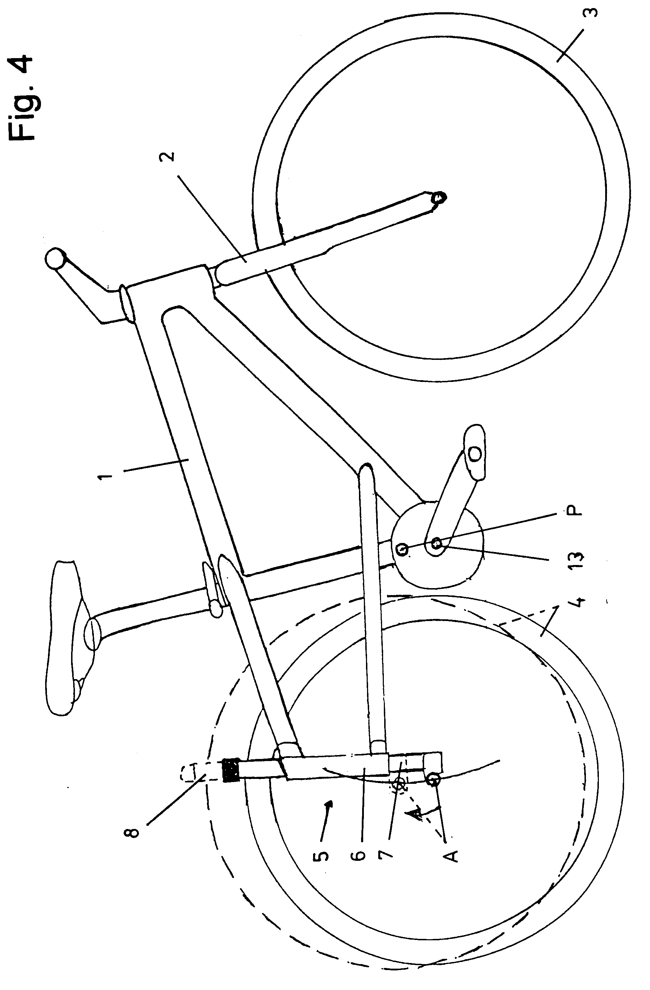

Die Ausführungsform der Fig. 4 zeigt nicht explizit das Federelement 9. Dieses kann beispielsweise innerhalb des Rohres 6 angeordnet sein. Eingezeichnet sind die beiden Positionen der Achse A im ausgefederten Zustand (unten) sowie im eingefederten Zustand (oben). Weiterhin ist ein Punkt P im Bereich des Tretlagers 13 eingezeichnet, wobei sich der Punkt P zwischen dem größten und dem kleinsten Kettenblatt oberhalb dieses Tretlagers 13 befindet. Der Abstand vom Tretlagermittelpunkt ist kleiner als 20 cm. Vor allem ist der Abstand dieses Punktes P von den beiden Federpositionen der Achse A im wesentlichen gleich groß, so daß Antriebseinflüsse beim Federungsvorgang weitgehend vermieden werden.

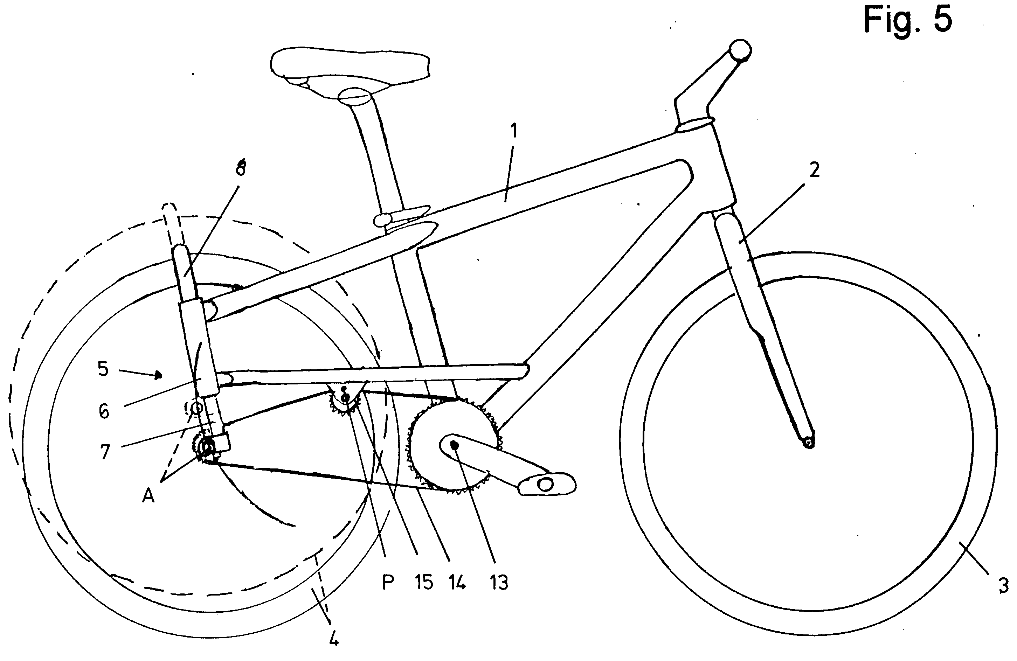

Die Variante in Fig. 5 besitzt zusätzlich im Bereich des oberen Trums der Antriebskette 14 ein Umlenkzahnrad 15, welches in diesem Fall den vorerwähnten Punkt P definiert. Auch hier sind die Abstände des Punktes P zu den beiden Federpositionen der Achse A im wesentlichen gleich.

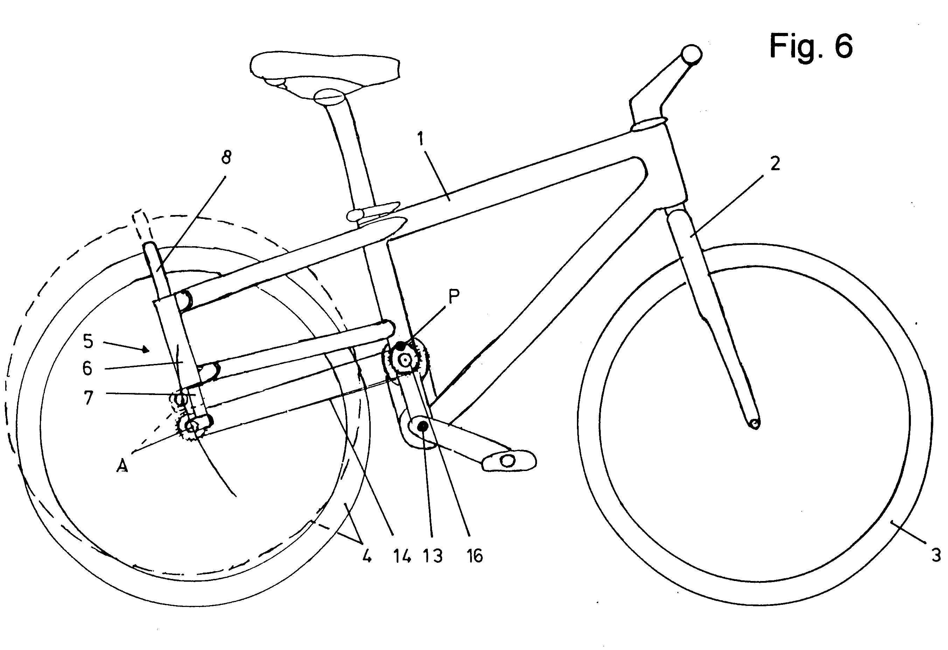

Die weitere Variante in Fig. 6 besitzt ein Zusatzgetriebe 16, welches den vorerwähnten Punkt P definiert. Da ebenso wie bei der Ausführungsvariante in Fig. 5 der Punkt P relativ weit oben liegt, ist das Rohr 6 bezüglich der Vertikalen etwas geneigt, so daß sich dadurch verbesserte Federeigenschaften ergeben.

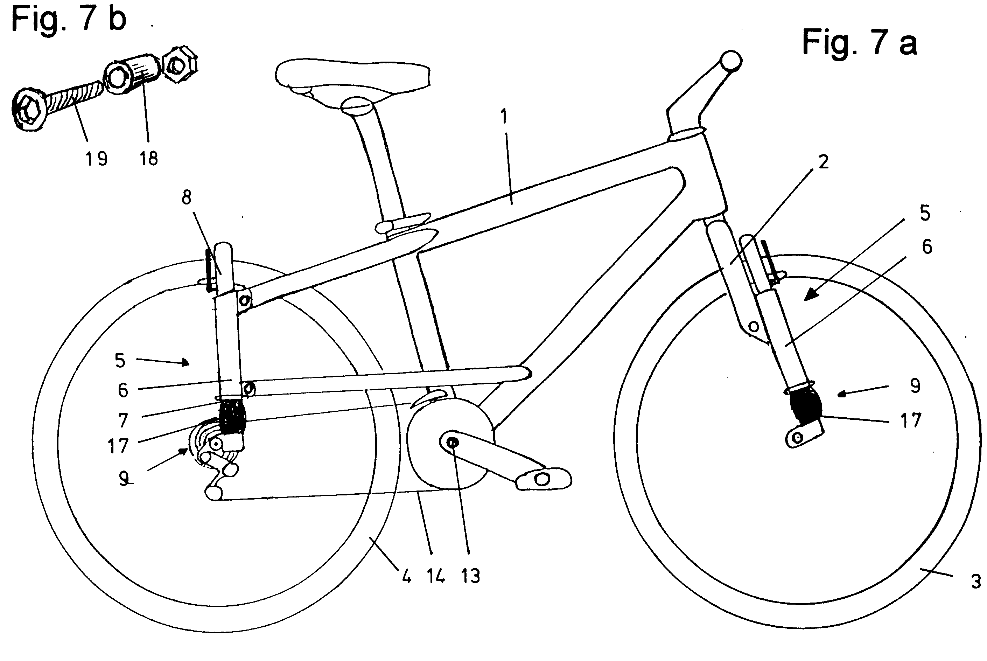

Die Ausfühtungsform in Fig. 7 weist als Federelement 9 einen Gummi- oder Elastomerpuffer 17 auf, welcher zwischen dem unteren Ende des Rohres 6 und dem unteren Ende der Stange 7 abgestützt ist. Außerdem ist das Rohr 6 federnd am Rahmen 1 angeordnet. Zu diesem Zweck ist gemäß Fig. 7b eine gering verformbare Hülse 18 vorgesehen, die von einer Befestigungsschraube 19 durchragt ist.

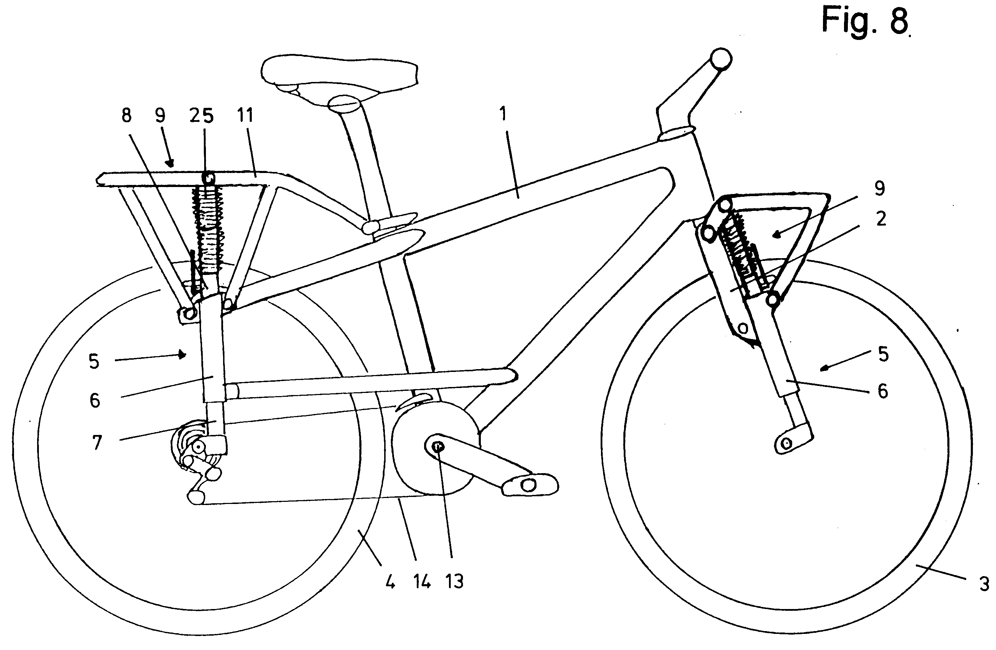

Die Ausführungsform der Fig. 8 zeigt ein Federelement 9, das sich innerhalb eines Faltenbalges 25 befindet und sich zwischen dem Gepäckträger 11 und der Stange 7 abstützt und dabei ganz oder teilweise in der Stange 7 liegt.

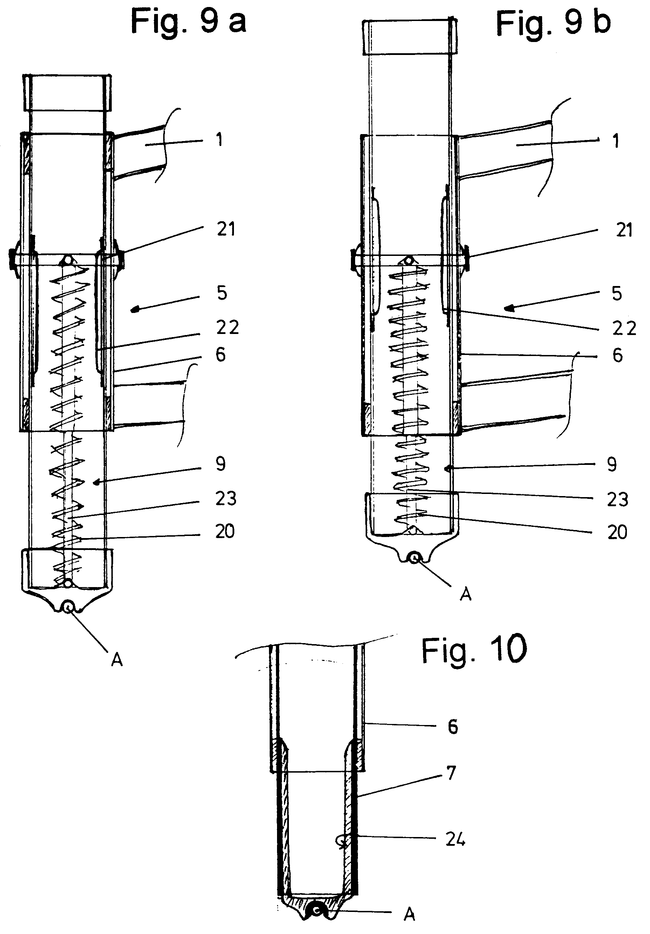

Die Fig. 9a und b zeigen in einer ausschnittsweisen Darstellung eine bevorzugte Ausführung des Federelements 9. Als Federelement 9 dient hier eine Wendelfeder 20, welche zwischen dem Rohr 6 und der Stange 7 abgestützt ist, wobei bei dieser Variante die Stange 7 als Rohr ausgebildet ist. Als Aufhängeeinrichtung 21 für die Wendelfeder 20 dient eine Querstrebe im Innern des Rohres 6. Dazu korrespondierend weist die Stange 7 einen in Verschieberichtung sich erstreckenden Schlitz 22 auf, welcher mindestens dem Federweg entspricht. Zwischen der Aufhängeeinrichtung 21 und dem Boden der Stange 7 ist die Wendelfeder 20 auf einer Innenstange 23 abgestützt. Fig. 9b zeigt im Vergleich zu Fig. 9a den Einfedervorgang, wobei insbesondere zu erkennen ist, daß sich die Stange 7 längs des Schlitzes 22 auf der Aufhängeeinrichtung 21 verschiebt.

Fig. 10 zeigt schließlich noch das untere Ende einer Stange 7, welches ebenfalls als Rohr ausgebildet ist. In dieses Rohr der Stange 7 ist ein Tragelement 24 für die Achse A des Rades 3, 4 eingepaßt. In diesem Fall erstreckt sich das Tragelement 24 bis zum unteren Ende des Rohres 6 und verstärkt auf diese Weise den unten aus dem Rohr herausragenden Abschnitt der Stange 7.

### Bezugszeichenliste

- 1: Rahmen
- 2: Lenkgabel
- 3: Vorderrad
- 4: Hinterrad
- 5: Federung
- 6: Rohr
- 7: Stange
- 8: Brücke
- 9: Federelement
- 10: Zylinder/Kolben-Einheit
- 11: Gepäckträger
- 12: Arretiereinrichtung
- 13: Tretlager
- 14: Antriebskette
- 15: Umlenkzahnrad
- 16: Zusatzgetriebe
- 17: Gummi- oder Elastomerpuffer
- 18: Hülse
- 19: Befestigungsschraube
- 20: Wendelfeder
- 21: Aufhängeeinrichtung
- 22: Schlitz
- 23: Innenstange
- 24: Tragelement
- 25: Faltenbalg
- A: Achse
- P: Punkt

## Patentansprüche

1. Zweirädriges Fahrzeug, insbesondere Fahrrad,
mit einem Rahmen (1),
mit einer am Rahmen (1) angeordneten Lenkgabel (2)
sowie mit einer Federung (5) zwischen dem Vorderrad (3) und/oder Hinterrad (4) und der Lenkgabel (2) bzw. dem Rahmen (1),
wobei die Federung (5) ein Rohr (6) aufweist, in dem eine Stange (7) verschiebbar geführt ist und wobei zwischen dem Rohr (6) und der Stange (7) ein Federelement (9) angeordnet ist,
**dadurch gekennzeichnet,**
daß das Rohr (6) - bei der Vorderradfederung - an der Lenkgabel (2) bzw. - bei der Hinterradfedetung - am Rahmen (1) angeordnet ist,
daß die Stange (7) sowohl aus dem unteren, offenen Ende als auch aus dem oberen, offenen Ende des Rohres (6) herausragt und
daß am unteren Ende der Stange (7) die Achse (A) des Rades (3, 4) angeordnet ist.

2. Fahrzeug nach dem vorhergehenden Anspruch,
**dadurch gekennzeichnet,**
daß das Rohr (6) fest oder federnd mit der Lenkgabel (2) bzw. dem Rohr (6) verbunden ist.

3. Fahrzeug nach einem der vorhergehenden Ansprüche,
**dadurch gekennzeichnet,**
daß die Stange (7) als Stangenrohr ausgebildet ist und
daß das Federelement (9) vollständig oder teilweise in dem Stangenrohr angeordnet ist und zwischen dem Stangenrohr und dem Rohr (6), dem Rahmen (1) oder einem mit dem Rahmen (1) verbundenen Teil abgestützt ist.

4. Fahrzeug nach Anspruch 3,
**dadurch gekennzeichnet,**
daß das obere Ende des Federelements (9) an einer Aufhängeeinrichtung (21) im Innern des Rohres (6) befestigt ist und
daß das Stangenrohr einen längsverlaufenden Schlitz (22) zur Aufnahme der Aufhängeeinrichtung (21) aufweist.

5. Fahrzeug nach Anspruch 1 oder 2,
**dadurch gekennzeichnet,**
daß das Federelement (9) außerhalb der Stange (7) angeordnet ist und zwischen der Stange (7) und dem Rohr (6), dem Rahmen (1) oder einem mit dem Rahmen (1) verbundenen Teil abgestützt ist.

6. Fahrzeug nach einem der vorhergehenden Ansprüche,
**dadurch gekennzeichnet,**
daß das Federelement (9) eine Wendelfeder (20), ein Gummi- oder Elastomerpuffer (17) und/oder eine Zylinder/Kolben-Einheit (10) ist.

7. Fahrzeug nach einem der vorhergehenden Ansprüche,
**dadurch gekennzeichnet,**
daß das untere Ende der Stange (7) ein eingesetztes Tragelement (24) für die Achse (A) des Rades (3, 4) aufweist.

8. Fahrzeug nach einem der vorhergehenden Ansprüche,
**dadurch gekennzeichnet,**
daß bei einer Hinterradfederung der Abstand zwischen der Achse (A) des Hinterrades (4) und des in Bewegungsrichtung des oberen Trums der Antriebskette (14) gesehenen nächstliegenden Punktes (P) eines Führungsteils der Antriebskette (14) für den ausgefederten Zustand sowie für den maximal eingefederten Zustand in etwa gleich ist.

9. Fahrzeug nach einem der vorhergehenden Ansprüche,
**dadurch gekennzeichnet,**
daß bei einer Hinterradfederung das Rohr (6) bezüglich der Vertikalen einen Winkel von +/- 30° einschließt.

10. Fahrzeug nach einem der vorhergehenden Ansprüche,
**dadurch gekennzeichnet,**
daß beidseitig des Rades (3, 4) jeweils eine Federung (5) vorgesehen ist und
daß die oberen Enden der Stange (7) mittels einer Brücke (8) oberhalb des Rades (3, 4) starr miteinander verbunden sind.

11. Fahrzeug nach einem der vorhergehenden Ansprüche,
**gekennzeichnet durch**
eine Arretiereinrichtung (12) zwischen dem Rohr (6) und der Stange (7).

12. Fahrzeug nach einem der vorhergehenden Ansprüche,
**dadurch gekennzeichnet,**
daß der Federung (5) ein Dämpfungselement zugeordnet ist.

13. Fahrzeug nach einem der vorhergehenden Ansprüche,
**dadurch gekennzeichnet,**
daß ein Gepäckträger (11) zumindest mit einem seiner Befestigungspunkte am Rohr (6) oder am rohmahen Rahmen (1) angeordnet ist.
